**Europäisches Patentamt**

**European Patent Office**

**Office européen des brevets**

(19)

(11) Publication number : **0 472 728 B1**

## (12) EUROPEAN PATENT SPECIFICATION

(45) Date of publication of patent specification :
**13.12.95 Bulletin 95/50**

(51) Int. Cl.[6] : **G02F 1/09**

(21) Application number : **90912455.4**

(22) Date of filing : **27.08.90**

(86) International application number :
**PCT/JP90/01081**

(87) International publication number :
**WO 91/14193 19.09.91 Gazette 91/22**

### (54) OPTICAL ISOLATOR

(30) Priority : **14.03.90 JP 63365/90**
**26.06.90 JP 166997/90**

(43) Date of publication of application :
**04.03.92 Bulletin 92/10**

(45) Publication of the grant of the patent :
**13.12.95 Bulletin 95/50**

(84) Designated Contracting States :
**DE FR GB**

(56) References cited :
**JP-A-60 150 026**
**JP-A-63 267 912**
**PATENT ABSTRACTS OF JAPAN vol. 11, no.**
**252 (P-605)(2699) 15 August 1987 & JP-A-62**
**056 923**
**PATENT ABSTRACTS OF JAPAN vol. 10, no.**
**86 (P-443)4 April 1986 & JP-A-60 222 818**

(73) Proprietor : **TOYO COMMUNICATION**
**EQUIPMENT CO. LTD.**
**1-1, Koyato 2-chome,**
**Samukawa-machi**
**Kouza-gun, Kanagawa 253-01 (JP)**

(72) Inventor : **ASANUMA, Nobuhisa, Toyo Comm.**
**Equipment Co., Ltd.**
**1-1, Koyato 2-chome,**
**Samukawa-machi**
**Kouza-gun, Kanagawa 253-01 (JP)**
Inventor : **UCHINO, Tatsuyuki, Toyo Comm.**
**Equipment Co. Ltd.**
**1-1, Koyato 2-chome,**
**Samukawa-machi**
**Kouza-gun, Kanagawa 253-01 (JP)**

(74) Representative : **Goddar, Heinz J., Dr. et al**
**FORRESTER & BOEHMERT**
**Franz-Joseph-Strasse 38**
**D-80801 München (DE)**

EP 0 472 728 B1

## Description

The present invention relates to an optical isolator and, more particularly, to the construction of an optical isolator composed of low-cost optical parts, for use in an optical transmission circuit which has a high precision non-reciprocal transmittance.

JP-A-63 267 912 discloses optical isolator comprising a polarizer and an analyzer disposed along an predetermined axis with their transmission axes arranged parallel to each other, and a halfwave plate and a magnetooptic element both disposed between the polarizer analyzer. The halfwave plate provides a phase difference of an odd multiple of $\pi$.

In an optical transmission circuit employing a semiconductor laser as a light source, if light from the light source is reflectd by a reflecting end of an optical part, a light receiving element, or the like in the transmission circuit and goes back into a resonator of the semiconductor laser, that is, if such reflected light enters again as light into the semiconductor laser, noise in a transmitter channel is easily manifested since emission of a coherent light from the semiconductor laser becomes unstable, and it causes a transmission quality of a signal to be deteriorated.

A conventional solution to this problem is to reduce the above mentioned reflected light by use of an optical isolator which possesses a nonreciprocal transmittance.

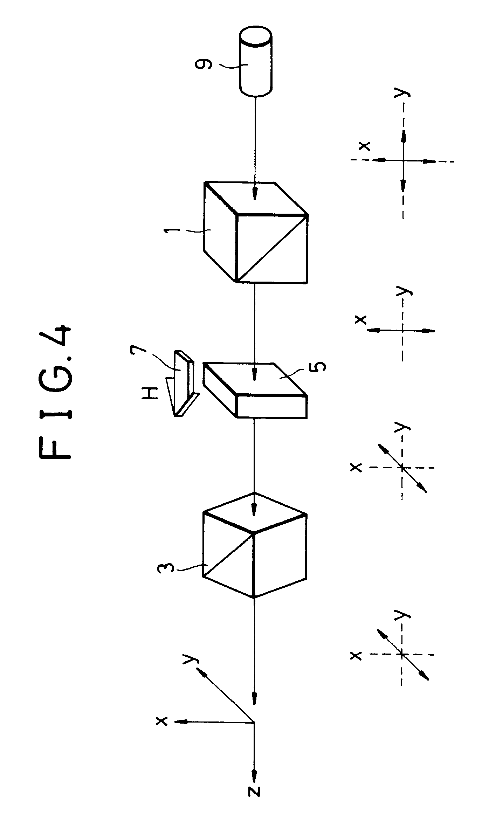

Fig. 4 is a diagrammatic showing of the basic structure of such a conventional optical isolator, which is composed of a polarizer 1 and an analyzer 3 disposed so that the optical axes of the polarizer and the analyzer are inclined 45° to each other, a Faraday element 5 formed of a magnetooptic crystal, for providing an angle of Faraday rotation of 45° between the polarizer 1 and the analyzer 3, and permanent magnet 7 for saturating magnetization of the Faraday.

In such an optical isolator, light emitted from a semiconductor laser 9 is produced to linearly polarized light in which a polarizing direction is parallel to an X axis by the polarizer 1. The linearly polarized light emitted from the polarizer 1 is passed through a Faraday element 5, and the Polarizing direction is rotated by an angle of 45° in a clockwise direction. Thus, the linearly polarized light having the polarizing direction inclined 45° with respect to the X axis enters to the analyzer 3.

The linearly polarized light incident on the analyzer 3 passes therethrough without suffering any loss, because its direction of polarization coincides with the through axis of the analyzer 3.

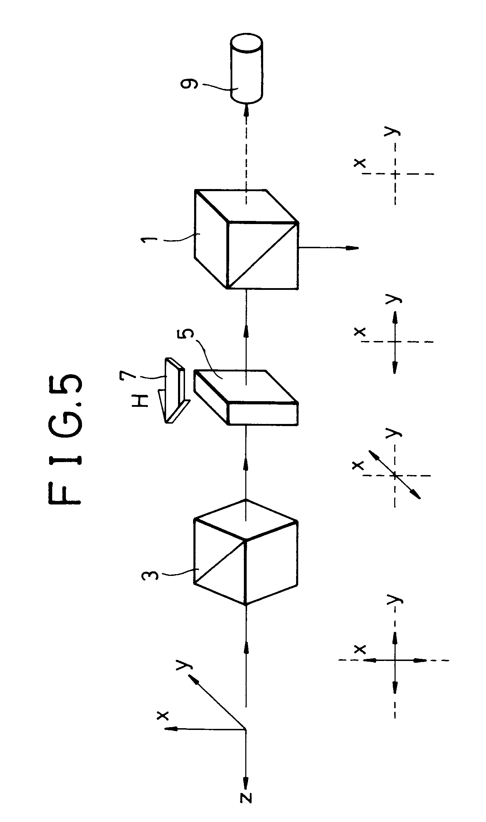

In the case of backward light, i. e. light incident to the optical isolator in the reverse direction, only linearly polarized light whose direction of polarization coincides with the through axis of the analyzer 3 is allowed to pass therethrough and then enters the Faraday element 5, as shown in Fig. 5.

Since a Faraday rotation isolator has a nonreciprocity characteristic, the polarizing direction of the incident light which is passed through the analyzer 3 is rotated by an angle of 45° in a clockwise direction of the linearly polarized light is parallel to the Y axis. In this instance, however, since the direction of polarization of the linearly polarized light perpendicularly intersects the optical axis of the polarizer 1, the polarized light does not pass therethrough; hence, no light will be reflected back to the semiconductor laser 9 which serves as a light source.

The most important element that constitutes the optical isolator is a Faraday element formed of a magnetooptic crystal as referred to above.

The thickness of the Faraday element, the intensity of saturation magnetization of the permanent magnet, its size, etc. are selected such that the optical isolator may provide optimum characteristics in accordance with wavelength variations of the light source and various other environmental or service conditions.

Next, a description which regards to an influence on the intensity of the backward light and the characteristics of the Faraday element, will be described by the Jones matrix.

Now, let the angle of rotation of the plane of polarization of incident light by the application of an external magnetic field to the Faraday element, the transmittance of each of the polarizer and the analyzer in a state of parallel nicols, and the transmittance of each of them in a state of crosses nicols, and the transmittance of each of them in a state of crossed nicols be represented by $\alpha$, Tp and Ts, respectively. (In general, the component Perpendicularly intersecting the optical axis is negligible, because Tp > 0.98 and Ts < 0.0005). Further, let the Jones matrix of the backward light incident to the polarizer 3 in Fig. 5, the Jones matrix of the polarizer 3, the Jones matrix of the Faraday element 5, the Jones matrix of the analyzer 1 and the Jones vector of the backward light entering again the light source 9 be represented by I, II, III IV and V, respectively. Then, the Jones matrixes I through V can be expressed as follows:

$$I = \frac{1}{\sqrt{a_x^2 + a_y^2}} \begin{pmatrix} a_x \\ a_y \end{pmatrix} \quad \cdots \quad (1)$$

$$II = \frac{1}{2} \begin{pmatrix} \sqrt{T_P} + \sqrt{T_s} & \sqrt{T_P} - \sqrt{T_s} \\ \sqrt{T_P} - \sqrt{T_s} & \sqrt{T_P} + \sqrt{T_s} \end{pmatrix} \quad \cdots \quad (2)$$

$$III = \begin{pmatrix} \cos\,\alpha & -\sin\,\alpha \\ \sin\,\alpha & \cos\,\alpha \end{pmatrix} \quad \cdots \quad (3)$$

$$IV = \begin{pmatrix} \sqrt{T_P} & 0 \\ 0 & \sqrt{T_s} \end{pmatrix} \quad \cdots \quad (4)$$

$$V = \begin{pmatrix} P_x \\ P_y \end{pmatrix} \quad \cdots \quad (5)$$

Therefore the vector of the backward light which enters again the light source 9 can be expressed by

$$V = (IV) \cdot (III) \cdot (II) \cdot (I) \quad (6)$$

and the intensity of the backward light (B.I.P.) can be expressed by

$$B.I.P. = |Px|^2 + |Py|^2 \quad (7)$$

In the computation of the intensity of the backward light (B.I.P.) to the light source, letting it be assumed that the backward light is circularly polarized light, then it follows that

$$a_x = a_y = 1 \quad (8)$$

and Eq. (1) is expressed as follows:

$$I = \frac{1}{\sqrt{2}} \begin{pmatrix} 1 \\ 1 \end{pmatrix} \quad \cdots\cdots\cdots (1)'$$

Further, assuming that the transmittance Ts of each of the polarizer and the analyzer is zero, then Eqs. (2) and (3) can be transformed as follows:

$$II = \frac{\sqrt{Tp}}{2} \begin{pmatrix} 1 & 1 \\ 1 & 1 \end{pmatrix} \quad \cdots\cdots\cdots (2)'$$

$$III = \begin{pmatrix} \sqrt{Tp} & 0 \\ 0 & 0 \end{pmatrix} \quad \cdots\cdots\cdots (3)'$$

Hence, substitution of Eqs. (1) , (2) , (3) and (4) into Eq. (6) gives

$$\begin{pmatrix} P_x \\ P_y \end{pmatrix} = \frac{T_p}{2\sqrt{2}} \begin{pmatrix} 1 & 0 \\ 0 & 0 \end{pmatrix} \begin{pmatrix} \cos\alpha & -\sin\alpha \\ \sin\alpha & \cos\alpha \end{pmatrix}$$

$$\begin{pmatrix} 1 & 0 \\ 0 & 0 \end{pmatrix} \cdot \begin{pmatrix} 1 \\ 1 \end{pmatrix} \quad \cdots \quad (9)$$

$$= \frac{T_p}{\sqrt{2}} \begin{pmatrix} 1 & 0 \\ 0 & 0 \end{pmatrix} \begin{pmatrix} \cos\alpha - \sin\alpha \\ \sin\alpha + \cos\alpha \end{pmatrix}$$

$$= \frac{T_p}{\sqrt{2}} \begin{pmatrix} \cos\alpha - \sin\alpha \\ 0 \end{pmatrix}$$

Thus, Px and Py can be expressed as follows:

$$P_x = \frac{T_p}{\sqrt{2}} ( \cos\alpha - \sin\alpha ) \quad (10)$$

$$P_y = 0.$$

Then, the intensity of the backward light (B.I.P.) which enters again the light source can be expressed as:

$$B.I.P. \fallingdotseq |P_x|^2$$

$$= \frac{1}{2} T_p^2 (\cos\alpha - \sin\alpha)^2$$

$$= \frac{1}{2} T_p^2 (1 + \sin 2\alpha) \quad (11)$$

Thus it is seen from Eq. (11) that even a slight deviation of the angle of Faraday rotation, $\alpha$, will seriously impair the isolation characteristic of the optical isolator.

The angle of Faraday rotation, $\alpha$, is a function of the thickness, operating temperature and working wavelength of the Faraday element, and Faraday elements now on the market are guaranteed the angle of rotation $\alpha = -45° \pm 1°$ under ordinary service conditions.

However, there are very few crystals which have the Faraday effect and can practically be used for the Faraday element and the fabrication of a single crystal with a homegeneous property is very difficult and inevitably involves close tolerance working, and hence is poor in the yield rate of product. This markedly raises the fabrication cost of the Faraday element that provides the angle of Faraday rotation with high accuracy, posing a problem that the fabrication cost of the Faraday element forms the most part of the manufacturing cost of the optical isolator.

The present invention is intended to offer a solution to the problem of such an expensive optical isolator as mentioned above and has for its object to provide a low-cost optical isolator which allows a tolerance on the angle of Faraday rotation but keeps its characteristic unaltered.

To attain the above objective, the optical isolator of the present invention as defined in the claim includes a polarizer and an analyzer disposed on an optical axis with their through axes held at right angles to each other and a halfwave plate and a Faraday element both disposed between the polarizer and the analyzer. The phase difference $\Delta$ by the halfwave plate, which is provided at predetermined wavelength $\lambda$, is selected to bear a relation, $\Delta = 2\pi (N \pm 1/2)$ where N is an integer including zero, to the latter. Further, the angle of rotation, $\alpha$, of the plane of polarization of incident light caused by the application of an external magnetic field to the Faraday element is 45° in absolute value, and the angle $\alpha$ and the angle $\beta$ between the fast axis of the halfwave plate and the plane of polarization of the incident light are set such that they bear the following relation:

$$2\beta + \alpha = 2\pi n$$

(where n is an integer including zero)

With such an arrangement, it is possible to constitute a high precision optical isolator irrespective of the tolerance on the angle of Faraday rotation.

Figs. 1 and 2 are diagrams each schematically showing the constitution of the optical isolator of the present

EP 0 472 728 B1

invention and the state of polarization of light emitted from each optical part;
Fig. 3 is a table showing the comparison of the optical isolator of the present invention and a prior art example in terms of the intensity of backward light; and
Figs. 4 and 5 diagrams schematically showing the constitution of the conventional optical isolator and the state of polarization of light emitted from each optical part.

The present invention will hereinafter be described in detail in respect of its embodiment shown in the drawings.

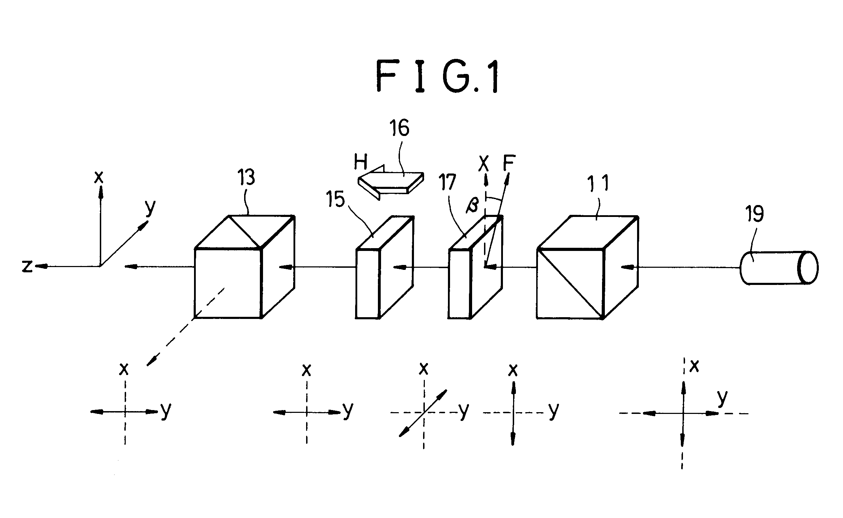

Fig. 1 schematically illustrates the constitution of the optical isolator according to the present invention. Reference numerals 11 and 13 indicate a polarizer and an analyzer, respectively, which are disposed with their optical axes spaced 90 ° apart.

Disposed between the polarizer 11 and the analyzer 13 are a Faraday element 15, a permanent magnet 16 for saturating the magnetooptic effect of the crystal forming the Faraday element 15, and a halfwave plate 17. The halfwave plate 17 is disposed with its fast axis F tilted by an angle $\beta$ to the x-axis and so that the azimuth angle $\beta$ and the angle of Faraday rotation $\alpha$ bear the following relation:

$$2\beta + \alpha = 0.$$

That is, if $\alpha = -45°$, then $\beta = 22.5$ ° . In the optical isolation of such a construction, light emitted from a semiconductor laser 19 used as a light source is polarized by the polarizer 11 and emitted therefrom as a linearly polarized light whose direction of polarization is parallel to the x-axis, and the linearly polarized light enters the halfwave plate 17, wherein its direction of polarization is rotated 45° clockwise about the x-axis, and then the linearly polarized light enters the Faraday element 15.

The linearly polarized light thus incident to the Faraday element 15 is further rotated 45° clockwise by virtue of the Faraday effect so that its direction of polarization becomes parallel to the y-axis, and then the linearly polarized light enters the analyzer 13 and passes therethrough without loss because of coincidence between its optical axis and the direction of polarization of the incident light.

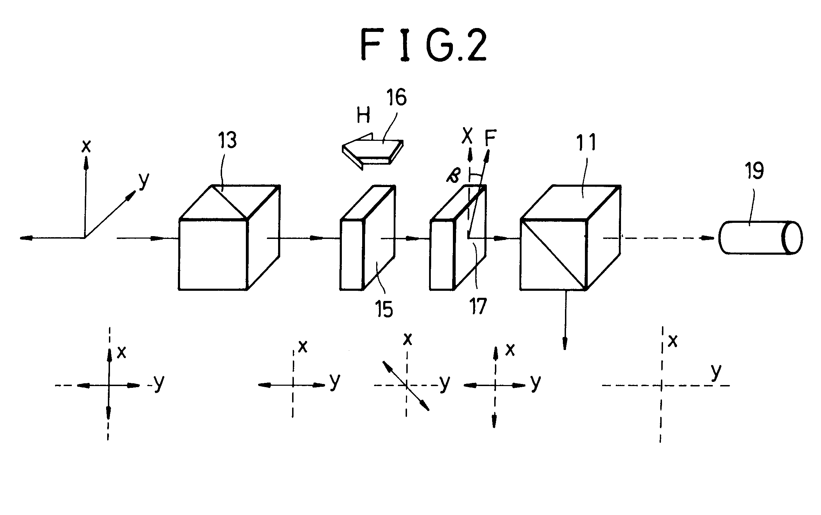

On the other hand, as shown in Fig. 2, reflected backward light enters first the analyzer 13, which permits the passage therethrough of only a component whose direction of polarization is parallel to the y-axis, and such a linearly polarized light enters the Faraday element 15.

The linearly polarized light incident to the Faraday element 15 is rotated 45 ° in the same direction as in the case of the abovementioned forward light and then enters the halfwave plate 17, from which it is emitted as a linearly polarized light whose direction of polarization is parallel to the y-axis. Since the direction of polarization of this light is at right angles to the optical axis of the polarizer 11 of the next stage, the incident light thereto is totally reflected in the junction plane thereof; hence, no reflected light enters again the semiconductor laser 10.

The above description has been given on the assumption that the optical isolator is in an ideal condition, and in general, complete interception of such backward light is difficult because of service conditions and scattering of individual characteristics of components used.

However, by compensating for the tolerance on the angle of Faraday rotation in the optical isolator through use of the halfwave plate as proposed by the present invention, the level of backward light can be drastically reduced as compared with that in the conventional optical isolator. This will hereinbelow be described in more detail using mathematical expressions.

Now, letting the Jones matrix of backward light incident to the polarizer 13, the Jones matrix of the polarizer, the Jones matrix of the Faraday element, the Jones matrix of the halfwave plate 17, the Jones matrix of the analyzer 11 and the Jones matrix of backward light returning to the light source 19 in Fig. 2 be represented by I', II', III', IV' and V', respectively, they can be expressed as follows:

$$I' = \frac{1}{\sqrt{a_x^2 + a_y^2}} \begin{pmatrix} a_x \\ a_y \end{pmatrix} \quad \cdots \quad (12)$$

$$II' = \begin{pmatrix} \sqrt{T_s} & 0 \\ 0 & \sqrt{T_p} \end{pmatrix} \quad \cdots \quad (13)$$

5

$$\text{III}' = \begin{pmatrix} \cos\ \alpha & -\sin\ \alpha \\ \sin\ \alpha & \cos\ \alpha \end{pmatrix} \qquad \cdots \ (14)$$

$$\text{IV}' = \begin{pmatrix} \sqrt{\text{Tp}} & 0 \\ 0 & \sqrt{\text{Ts}} \end{pmatrix} \qquad \cdots \ (15)$$

$$\text{V}' = \begin{pmatrix} P_x \\ P_y \end{pmatrix} \qquad \cdots \ (16)$$

$$\text{VI}' = \begin{pmatrix} \cos^2\ \beta\ e^{i\Delta/2} + \sin^2\beta\ e^{-i\ \Delta/2} & i\ \sin2\ \beta\ \sin\ \Delta/2 \\ i\ \sin2\ \beta\ \sin\ \Delta/2 & \cos^2\ \beta\ e^{-i\ \Delta/2} + \sin^2\beta\ e^{i\ \Delta/2} \end{pmatrix} \qquad \cdots \ (17)$$

Further, the Jones vector V' of the backward light entering again the light source 19 is as follows:

$$\text{V}' = (\text{IV}')\,(\text{VI}')\,(\text{III}')\,(\text{II}')\,(\text{I}') \quad (18)$$

and as is the case with Eq. (7), the intensity of the backward light (B.I.P.) can be expressed as follows:

$$\text{B.I.P.} = |P_x|^2 + |P_y|^2 \quad (19)$$

Moreover, assuming that the backward light to the optical isolator is circularly polarized light and the polarized light transmission factor $T_s$ of each of the polarizer 13 and the analyzer 11 is set to 0. Eq. (18) becomes as follows:

$$\begin{pmatrix} P_x \\ P_y \end{pmatrix} = \frac{T_p}{\sqrt{2}} \begin{pmatrix} 1 & 0 \\ 0 & 0 \end{pmatrix} \begin{pmatrix} A & B \\ C & D \end{pmatrix}$$

$$\begin{pmatrix} \cos\alpha & -\sin\alpha \\ \sin\alpha & \cos\alpha \end{pmatrix} \begin{pmatrix} 0 & 0 \\ 0 & 1 \end{pmatrix} \begin{pmatrix} 1 \\ 1 \end{pmatrix} \qquad \cdots \; (20)$$

$$\begin{pmatrix} \text{where:} \; A = \cos^2\beta\, e^{i\Delta/2} + \sin^2\beta\, e^{-i\Delta/2}, \\ B = i\sin2\beta\sin\Delta/2, \; C = i\sin2\beta\;\sin\Delta/2, \\ D = \cos^2\beta\, e^{-i\Delta/2} + \sin^2\beta\, e^{i\Delta/2}, \end{pmatrix}$$

$$= \frac{T_p}{\sqrt{2}} \begin{pmatrix} 1 & 0 \\ 0 & 0 \end{pmatrix} \begin{pmatrix} A & B \\ C & D \end{pmatrix} \begin{pmatrix} -\sin\alpha \\ \cos\alpha \end{pmatrix}$$

$$= \frac{T_p}{\sqrt{2}} \begin{pmatrix} 1 & 0 \\ 0 & 0 \end{pmatrix} \begin{pmatrix} -A\sin\alpha & + B\cos\alpha \\ -C\sin\alpha & + D\cos\alpha \end{pmatrix}$$

$$= \frac{T_p}{\sqrt{2}} \begin{pmatrix} -A\sin\alpha & + B\cos\alpha \\ 0 \end{pmatrix}$$

Then, the intensity of the backward light (B.I.P.) to the light source 19 can be approximated as follows:

$$B.I.P. \fallingdotseq |P_x|^2$$

$$= \frac{T_p^2}{2} |-A\sin\alpha + B\cos\alpha|^2$$

$$= \frac{1}{2} T_p^2 \left( \cos^2\frac{\Delta}{2} \cdot \sin^2\alpha + \sin^2\frac{\Delta}{2} \cdot \sin^2(2\beta+\alpha) \right) \qquad \cdots \; (21)$$

where $\alpha$ is the angle of Faraday rotation, $\Delta$ is the phase difference between ordinary and extraordinary rays in the halfwave plate, $\beta$ is the angle between the fast axis F of the halfwave plate and incident linearly polarized light and the transmission factor $T_s$ is neglected.

Thus, an example of a particular solution of Eg. (21) which makes the intensity of backward light (B.I.P.) completely zero is given as follows:

$$\Delta = 180°, \; 2\beta + \alpha = 0.$$

In practice, the phase difference $\Delta$ in the halfwave plate can easily be held within tolerances of $\pm 3°$, even if scatter in manufacture, the working wavelength and service conditions such as a change in the operating temperature are taken into account. It is therefore seen that the first term of Eq. (21) assumes a value smaller than $4 \times 10^{-4}$, which is negligibly small as compared with the second term. The second term indicates that the intensity of backward light (B.I.P.) can be minimized by slightly rotating the halfwave plate about the incident ray axis to compensate for the scatter of the angle of Faraday rotation $\alpha$ so that the azimuth angle $\beta$ of the halfwave plate may satisfy the following condition:

$$2\beta + \alpha = \quad (22)$$

That is, by obtaining $\alpha$ through measurement of the tolerance on the angle of Faraday rotation and by setting the angle $\beta$ between the fast axis F of the halfwave plate 17 and incident linearly polarized light such that Eq. (22) may hold, it is possible to provide a highly accurate optical isolator irrespective of the tolerance on the angle of Faraday rotation. Hence, the optical isolator can be fabricated at low cost.

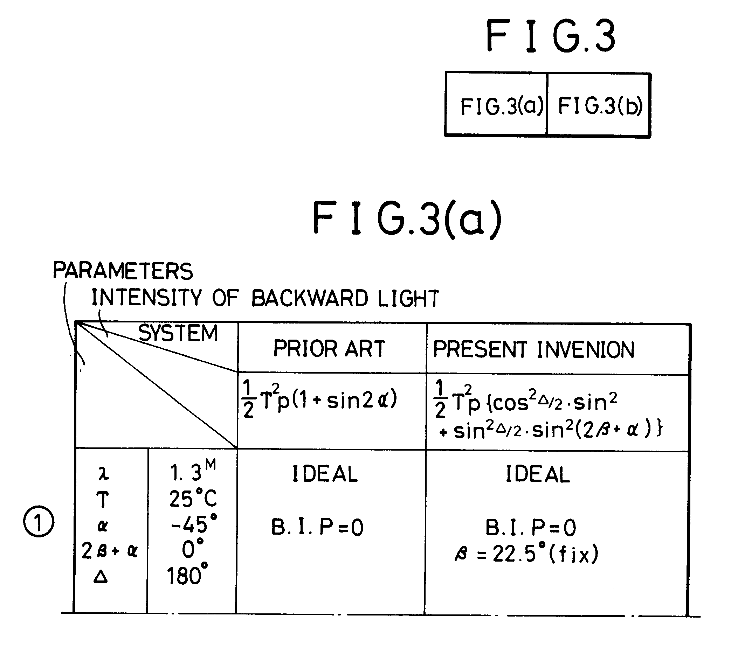

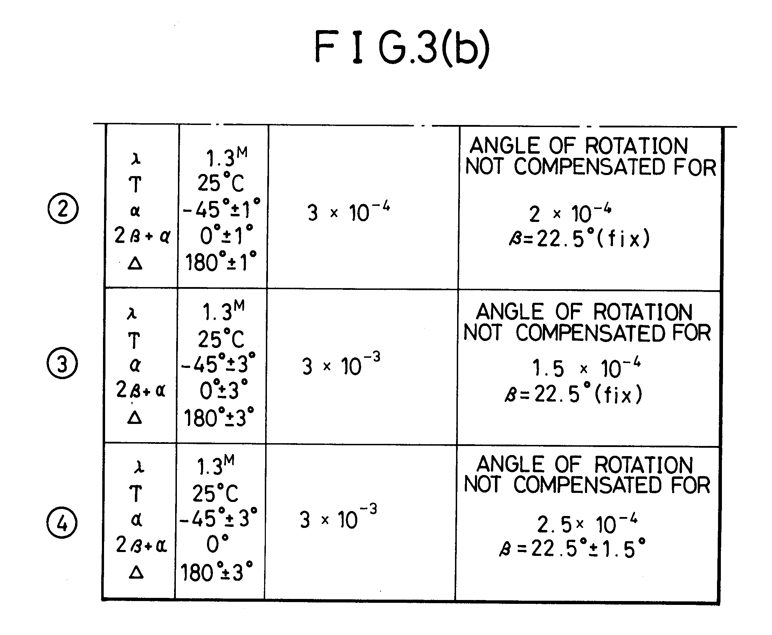

Fig. 3 is a table showing the intensity of backward light in the optical isolator of the present invention in contradistinction to the intensity of backward light in the prior art, using various parameters. Of the parameters shown in Fig. 3, the wavelength $\lambda$, the operating temperature T, the polarized light transmission factor $T_p$, and the angle $\beta$ between the fast axis of the halfwave plate and the plane of polarization of incident light are fixed to 1.3 $\mu$m 25° C, 0.98 and 22.5° , respectively in a trial calculation of the intensity of backward light.

As shown in ① of Fig. 3, in the case where the angle of Faraday rotation $\alpha$ is -45 ° , the phase difference $\Delta$ by the halfwave plate used in the optical isolator of the present invention is 180° and $2\beta + \alpha = 0$, the both optical isolators operate ideally and the intensity of backward light (B.I.P.) is reduced to zero.

In practice, however, in the case where the Faraday element has a tolerance of about $\pm$ 1° on the angle of Faraday rotation $\alpha$ due to its quality or machining accuracy, the phase difference $\Delta$ by the halfwave plate is set to 180 ° $\pm$ 1 ° and the halfwave plate is merely interposed between the Faraday element 15 and the analyze 11, $2\beta + \alpha$ becomes 0 ° $\pm$ 1 °. In this instance, as shown in ② of Fig. 3, the intensity of backward light (B.I.P.) in the conventional optical isolator is approximately $3 \times 10^{-4}$, whereas in the optical isolator of the present invention the intensity of backward light (B.I.P.) is $2 \times 10^{-4}$.

In the case where a low-cost Faraday element having a larger tolerance on the angle of Faraday rotation is employed and the phase difference $\Delta$ by the halfwave plate is set to a greater value 180° $\pm$ 3 ° , the intensity of backward light (B.I.P.) in the conventional optical isolator increases and its function is impaired accordingly, but the intensity of backward light (B.I.P.) in the optical isolator of the present invention decreases and its isolation function improves, as shown in ③ of Fig. 3.

Further, by compensating for the rotation of the halfwave plate in a manner to satisfy Eg. (3) under the same conditions as mentioned above, the intensity of backward light (B.I.P.) in the optical isolator of the present invention markedly improves to $2.5 \times 10^{-4}$, as shown in ④ of Fig. 3.

For example, in the case where the angle of Faraday rotation is -42 ° , the phase difference $\Delta$ by the halfwave plate is 177 ° the wavelength $\lambda$ is 1.3 $\mu$m and the operating temperature T is 25° C, the intensity of backward light (B.I.P.) in the conventional optical isolator is as follows:

$$\text{B.I.P.} = \frac{1}{2}\, 0.98^2\, (1 + \sin2\,(-42)) = 2.6 \times 10^{-3}.$$

on the other hand, according to the present invention, when the half-wave plate is disposed so that $2\beta + \alpha = 0$, i.e. the angle $\beta$ becomes 21° , the intensity of backward light (B.I.P) becomes as follows:

$$\text{B.I.P.} = \frac{1}{2}\, 0.98^2\, \{\cos^2 \frac{177°}{2} \cdot \sin^2(-42)$$

$$+ \sin^2 \frac{177°}{2} \cdot \sin^2(2 \cdot 21 + (-42))\} = 1.47 \times 10^{-4},$$

from which it can be seen that the function of the optical isolator remarkably improves as compared with the traditional optical isolator.

With such a construction as described above, the optical isolator of the present invention possesses the advantage of improved, highly accurate isolation function, even if its Faraday element is identical with that used in the prior art or has a large tolerance on the angle of Faraday rotation. Besides, the optical isolator of the present invention has structural advantages.

That is to say, the prior art optical isolator involves complicated setting of the polarizer or analyzer, because they must be disposed so that the optical axes of them are shifted by an angle of 45° to each other. In the isolator of the present invention, however, since the polarizer and the analyzer are arranged so that the optical axes of them are shifted by an angle of 80° to each other, that one face of the analyzer 13, which is parallel to the path of the linear polarized light, can be in contact with an upper surface of a base of an optical device. Therefore, this not only allows ease in setting of the polarizer and the analyser but also permits miniaturization of the isolator structure because the polarizer and the analyzer can be formed to have flat sides.

While in the above the phase difference $\Delta$ by the halfwave plate has been described to be 180° , the invention is not limited specifically thereto and the phase difference $\Delta$ may also be $\Delta = 2\pi\,(N\pm1/2)$ (where N is an integer including zero), in which case the angle of Faraday rotation $\alpha$ and the azimuth angle $\beta$ between the fast axis of the halfwave plate and the incident linearly polarized light need only to be set so that $2\beta + \alpha =$

$2\pi n$, (where n is an integer including zero).

Namely, the above embodiment has been described in connection with the case where N = 0, but in the case where N = 1 and the phase difference by the halfwave plate $\Delta$ = 540° , the same results as mentioned above can be obtained by adjusting the angle $\beta$ between the fast axis F of the halfwave plate and the optical axis of incident linearly polarized light so that 2 $\beta$ + $\alpha$ = $2\pi n$, where n is an integer including zero.

Since the present invention has such a construction and a function as described above, a large tolerance on the angle of rotation of the Faraday element which has a reciprocation and is used in the optical isolator can be allowed by compensating for it through use of the half-wave plate which has a nonreciprocal transmittance. Thus, the present invention affords reduction of the manufacturing cost of the optical isolator through utilization of an inexpensive Faraday element, allows ease in assembling and adjustment of the optical isolator and permits its miniaturization; hence, the invention is of great utility when put to practical use.

## Claims

1. An optical isolator comprising a polarizer (11) and an analyzer (13) disposed on a Predetermined axis with their transmission axes held at right angles to each other, and a halfwave plate (17) and a magnetooptic element (15) exhibiting the Faraday effect both disposed between said polarizer (11) and said analyzer (13), wherein a phase difference $\Delta$ provided by said halfwave plate (17) at Predetermined wavelength $\lambda$ is $\Delta = 2\pi$ (N$\pm$ 1/2), N being an integer including zero, wherein an angle of rotation $\alpha$ of the plane of polarization of incident light, which is provided by the application of an external magnetic field to said magnetooptic element (16), has an absolute value of 45°, and wherein said angle of rotation $\alpha$ and an angle $\beta$ between the fast axis of said halfwave plate (17) and said plane of polarization of said incident light $\beta$ are set such that 2$\beta$ + $\alpha$ = 2 $\pi$ n, n being an integer including zero.

## Patentansprüche

1. Ein optischer Isolator mit einem Polarisator (11) und einem Analysator (13), die auf einer vorgegebenen Achse angeordnet sind, wobei ihre Transmissionsachsen rechtwinklig zueinander gehalten werden, und mit einer Halbwellen-Platte (17) und einem magneto-optischen Element (15), das den Faraday-Effekt zeigt, die beide zwischen dem Polarisator (11) und dem Analysator (13) angeordnet sind, wobei durch die Halbwellen-Platte (17) eine Phasendifferenz $\Delta$ bei einer vorgegebenen Wellenlänge wird mit $\Delta = 2 \pi$ (N $\pm$ 1/2) erzeugt wird, wobei N eine ganze Zahl einschließlich Null ist, der Drehwinkel $\alpha$ der Ebene der Polarisation des auftreffenden Lichts, der durch die Aufbringung eines magnetischen Feldes auf das magneto-optische Element (16) bewirkt wird, einen Absolutwert von 45° hat, und wobei der Drehwinkel $\alpha$ und der Winkel $\beta$ zwischen der festen Achse der Hauptwellen-Platte (17) und der Ebene der Polarisation des auftreffenden Lichts $\beta$ derart eingestellt ist, daß 2 $\beta$ + $\alpha$ = 2 $\pi$ n ist, wobei n eine ganze Zahl einschließlich Null ist.

## Revendications

1. Isolateur optique, comprenant un polarisateur (11) et un analyseur (13), disposés sur un axe prédéterminé, leurs axes de transmission étant maintenus perpendiculairement l'un par rapport à l'autre, et une plaque demi-onde (17) et un élément magnéto-optique (15) présentant l'effet Faraday, disposés tous deux entre ledit polariseur (11) et ledit analyseur (13), dans lequel une différence de phase $\Delta$ produite par ladite plaque demi-onde (17) pour une longueur d'onde prédéterminée $\lambda$ vaut $\Delta = 2 \pi$ (N$\pm$1/2), N étant un entier y compris zéro, dans lequel l'angle de rotation $\alpha$ du plan de polarisation de la lumière incidente, créé par application d'un champ magnétique externe audit élément magnéto-optique (16), a une valeur absolue de 45°, et dans lequel ledit angle de rotation $\alpha$ et un angle $\beta$, fait entre l'axe optique de ladite plaque demi-onde (17) et ledit plan de polarisation de ladite lumière incidente $\beta$, sont d'une valeur donnée par 2 $\beta$ + $\alpha$ = 2 $\pi$ n, n étant un entier, y compris zéro.

# FIG.1

EP 0 472 728 B1

# F I G.2

# F I G.3

| FIG.3(a) | FIG.3(b) |
|---|---|

## F I G.3(a)

PARAMETERS

INTENSITY OF BACKWARD LIGHT

| SYSTEM | | PRIOR ART | PRESENT INVENION |
|---|---|---|---|
| | | $\frac{1}{2}T^2p(1+\sin 2\alpha)$ | $\frac{1}{2}T^2p\{\cos^2\Delta/2\cdot\sin^2 + \sin^2\Delta/2\cdot\sin^2(2\beta+\alpha)\}$ |
| $\lambda$ | $1.3^M$ | IDEAL | IDEAL |
| $T$ | $25°C$ | | |
| $\alpha$ | $-45°$ | B.I.P=0 | B.I.P=0 |
| $2\beta+\alpha$ | $0°$ | | $\beta=22.5°(fix)$ |
| $\Delta$ | $180°$ | | |

①

# F I G.3(b)

| | | | |
|---|---|---|---|
| ② | $\lambda$   $1.3^M$<br>T   $25°C$<br>$\alpha$   $-45°±1°$<br>$2\beta+\alpha$   $0°±1°$<br>$\Delta$   $180°±1°$ | $3 \times 10^{-4}$ | ANGLE OF ROTATION<br>NOT COMPENSATED FOR<br><br>$2 \times 10^{-4}$<br>$\beta=22.5°(fix)$ |
| ③ | $\lambda$   $1.3^M$<br>T   $25°C$<br>$\alpha$   $-45°±3°$<br>$2\beta+\alpha$   $0°±3°$<br>$\Delta$   $180°±3°$ | $3 \times 10^{-3}$ | ANGLE OF ROTATION<br>NOT COMPENSATED FOR<br><br>$1.5 \times 10^{-4}$<br>$\beta=22.5°(fix)$ |
| ④ | $\lambda$   $1.3^M$<br>T   $25°C$<br>$\alpha$   $-45°±3°$<br>$2\beta+\alpha$   $0°$<br>$\Delta$   $180°±3°$ | $3 \times 10^{-3}$ | ANGLE OF ROTATION<br>NOT COMPENSATED FOR<br><br>$2.5 \times 10^{-4}$<br>$\beta=22.5°±1.5°$ |

EP 0 472 728 B1

# FIG.4

EP 0 472 728 B1

FIG.5